# EUROPÄISCHE PATENTSCHRIFT

(11) **EP 1 282 790 B1**
(45) Veröffentlichungstag und Bekanntmachung des Hinweises auf die Patenterteilung: **05.11.2003**
(21) Anmeldenummer: 01927926.4
(22) Anmeldetag: 27.04.2001
(51) Int. Cl.: F16H 7/12

(54) **SPANNVORRICHTUNG FÜR ZUGMITTEL**
TENSION DEVICE FOR TRACTION MEANS
DISPOSITIF DE TENSION DESTINE A DES MOYENS DE TRACTION

(30) Priorität: 17.05.2000 DE 10024318
(43) Veröffentlichungstag der Anmeldung: 12.02.2003
(73) Patentinhaber: INA- Schaeffler KG, 91074 Herzogenaurach (DE)
(72) Erfinder: PETRI, Werner, 91058 Erlangen (DE); BERGER, Rudolf, 52152 Simmerath (DE); SCHMIDT, Werner, 91074 Herzogenaurach (DE)
(86) Internationale Anmeldenummer: EP0104761
(87) Internationale Veröffentlichungsnummer: WO01088407

(56) Entgegenhaltungen:
- DE-A- 4 343 429

## Beschreibung

### Gebiet der Erfindung

Die vorliegende Erfindung betrifft eine Spannvorrichtung für Zugmittel wie Riemen und Ketten, die ein ortsfestes Maschinenteil umfasst, in dem ein Spannarm über einen Lagerzapfen schwenkbar angeordnet ist. An dem freien Ende des Spannarms ist eine über ein Wälzlager drehbar und mittels einer Torsionsfeder an dem Zugmittel federnd abgestützte Spannrolle angeordnet. Das der Spannrolle zugeordnete Wälzlager ist über einen Lagerring an dem Spannhebel abgestützt und mittels einer Verschraubung lösbar befestigt.

### Hintergrund der Erfindung

Eine gattungsgemäße Spannvorrichtung gemäß der zuvor beschriebenen Bauart ist aus der DE 43 43 429 A1 bekannt. Diese Spanneinrichtung ist versehen mit einem Maschinenteil, welches ortsfest über zwei Befestigungsösen beispielsweise an einer Brennkraftmaschine lösbar angeordnet ist. Das Maschinenteil ist mit einer kreisringförmigen Ausnehmung zur Aufnahme einer Torsionsfeder versehen, welche zwischen einem Boden des Maschinenteils und dem Spannarm abgestützt ist. Dabei umschließt die Torsionsfeder einen zentrischen axialen Ansatz des Maschinenteils, in dem der Lagerzapfen des Spannarms über ein als Gleitlagerbuchse gestaltetes Radiallager schwenkbar gelagert ist. Zur axialen Abstützung des Spannarms an dem Maschinenteil dient eine endseitig des Lagerzapfens angeordnete Scheibe, welche sich über einen Reibbelag stirnseitig an dem Maschinenteil abstützt. Auf dem Spannarm ist weiterhin über ein Wälzlager eine Spannrolle gelagert. Dabei ist das Wälzlager außenseitig von einem als Kunststoffring oder Stahlring bzw. einer Stahlscheibe gestalteten Laufring umschlossen ist, deren Mantelfläche eine Lauffläche für ein Zugmittel, insbesondere einen Riemen bildet. Der innere Lagerung des Spannrollenlagers liegt kraftschlüssig an einer Anlagefläche des Spannarms an und ist an diesem mittels einer Halteschraube lösbar befestigt. Der äußere Lagerring des Wälzlagers ist von dem aus Kunststoff oder Stahl hergestellten Laufring umgeben.

Derartige Spannvorrichtungen haben die Aufgabe, eine möglichst gleichbleibende, schlupffreie Vorspannung eines Zugmittels zu gewährleisten. Für eine dauerhafte Funktion der automatischen Spannvorrichtung ist es erforderlich, dass die Mantelfläche der Spannrolle rechtwinklig zu den Achsen der übrigen Laufrollen bzw. Antriebsrollen des Zugmitteltriebes bzw. zur Anschraubfläche der Spannvorrichtung an der Brennkraftmaschine ausgerichtet ist. Gleichfalls ist es erforderlich, dass die Mantelflächen der Spannrollen mit den Mantelflächen aller Lauf- bzw. Antriebsrollen des Zugmitteltriebs parallel fluchtend ausgerichtet sind. Abweichungen, d. h. Fluchtungsabweichungen führen zu einer außermittigen Führung des Zugmittels an der Spannrollenlauffläche, was zu einem erhöhten Zugmittelverschleiß führt und zu einem vorzeitigen Ausfall des Zugmitteltriebs. Extreme Fluchtungsabweichungen können weiterhin zu einem Ablaufen des Zugmittels von der Spannrolle führen und damit zu einem Ausfall des Zugmitteltriebs. Fluchtungsabweichungen können sich selbst bei Einhaltung einer hohen Fertigungsgüte durch die Aufsummierung von Fertigungstoleranzen einstellen. Weiterhin begünstigt ein Verschleiß der Lagerzapfenlagerung die Fluchtungsabweichung.

### Zusammenfassung der Erfindung

Die Aufgabe der vorliegenden Erfindung besteht darin, eine Spannvorrichtung zu realisieren, deren Spannrolle zulässige Fluchtungsabweichungen einhält, zur Erzielung einer verbesserten Lebensdauer des Zugmittels. Ein Verfahren zur Gestaltung des Spannarms eines Solchen Vorrichtung Soll auch definiert werden.

Erfindungsgemäß stützt sich das Wälzlager der Spannrolle axial an einer Anlagefläche des Spannarms ab, die zum Ausgleich einer Fluchtungsabweichung in einer Nennposition von einer rechtwinkligen Ausrichtung zu einer Längsachse der Spannvorrichtung abweicht in dem ungespannten Zustand der Spannvorrichtung. Die auch als eine gewisse Schiefstellung zu betrachtende Fluchtungsabweichung kompensiert Einflüsse wie, Fertigungstoleranzen, Lagerspiel sowie elastische Verformungen. Diese Spannarmgestaltung gewährleistet eine für die Funktion des Zugmitteltriebs erforderliche, rechtwinklige Anordnung der Spannrollenmantellinie zu Abstützflächen der Spannvorrichtung, beispielsweise an einer Brennkraftmaschine sowie zu dem Zugmittel. Gleichzeitig stellt sich eine parallele Zuordnung der Spannrollenmantellinie zu der Längsachse der Spannvorrichtung ein.

Eine vorteilhafte Weiterbildung der Erfindung sieht vor, die im Spannarm eingebrachte Bohrung für die Verschraubung des Radiallagers, geneigt bzw. schräg verlaufend anzuordnen. Der von einer achsparallelen Zuordnung zu der Längsachse der Spannvorrichtung abweichende Bohrungsverlauf dient als eine unterstützende Maßnahme zu der erfindungsgemäß gestalteten bzw. ausgerichteten Anlagefläche. Der Bohrungsverlauf vermeidet damit eine nachteilige Schiefstellung der Schraube, welche eine zwanghafte Verformung der Schraube bewirkt.

Die Problemstellung der vorliegenden Erfindung wird außerdem durch ein Verfahren gelöst, das eine gezielte mechanische Bearbeitung der Anlagefläche des Spannarms berücksichtigt. Danach ist eine mechanische Bearbeitung des Spannarms im Bereich einer Abstützung des Wälzlagers und der Wälzlagerbefestigung nach einer erfolgten Vormontage der Spannvorrichtung vorgesehen. Dazu wird der Spannarm in einer Nennposition mechanisch bearbeitet. Der Spannarm nimmt dabei eine Position ein, bei der der Spannarm gegenüber dem Maschinenteil verschwenkt ist und diese Position der Einbaulage entspricht. In dieser Nennposition ist sowohl das Spiel der Gleitlagerung des Lagerzapfens aufgehoben sowie die elastische Verformung des Spannarms einschließlich des Maschinenteils.

Erfindungsgemäß erfolgt die mechanische Bearbeitung des Spannarms zur Befestigung bzw. Abstützung des Wälzlagers an einer bis auf die Spannrolle fertig montierten Spannvorrichtung. Die aufgebrachte Spannkraft zur Verlagerung der Spannrolle in die Position, in der die mechanische Bearbeitung erfolgt, entspricht der Spannkraft mit der sich die Spannrolle an dem Zugmittel abstützt. Die mechanische Bearbeitung erfolgt somit analog der Einbausituation. In dieser auch als Nennposition zu bezeichnenden Lage des Spannarms erfolgt die mechanische Bearbeitung, bei der die simulierte Verkippung des Spannarms der späteren Kippung in der Einbaulage entspricht. Damit kann eine exakte rechtwinklige Ausrichtung der Spannrollenmantellinie zu Abstützflächen an der Brennkraftmaschine bzw. eine rechtwinklige Ausrichtung zu den Achsen weiterer Riemenscheiben von Aggregaten des Zugmitteltriebs erreicht werden.

Zweckmäßigerweise erfolgt die mechanische Bearbeitung des Spannarms mittels einer Haltevorrichtung, d. h. einer Bearbeitungsmaschine, in der sowohl das Maschinenteil lagefixiert ist als auch der Spannarm in die Position verlagert ist, die der Einbaulage entspricht. Diese Haltevorrichtung ermöglicht eine mechanische Bearbeitung der Anlagefläche in einer Lage des Spannarms, in der alle Fertigungstoleranzen, das Lagerspiel des Radiallagers, über das der Lagerzapfen des Spannarms im Maschinenteil gelagert ist sowie die elastische Verformung des Spannarms, ausgeglichen sind. In dieser Position des Spannarms kann folglich eine Bearbeitung der Abstützfläche an dem Spannarm für den inneren Wälzlagerring erfolgen, zur Erzielung einer geforderten zulässigen Fluchtungsabweichung. Erfindungsgemäß kann eine derartige Vorrichtung in einer automatisierten Montagelinie integriert werden, die eine kostengünstige Bearbeitung und Montage auch für große Stückzahlen ermöglicht.

Die erfindungsgemäße Maßnahme schließt alle mechanischen Bearbeitungen zur Befestigung und zur Abstützung des Wälzlagerrings an dem Spannarm ein. In der Nennposition des Spannarms erfolgt die Bearbeitung der stirnseitigen Anlagefläche für den Wälzlagerinnenring. Weiterhin wird das Gewinde für die Verschraubung des Wälzlagers in die Bohrung des Spannarms eingebracht. Der vorzugsweise als ein Gußteil gestaltete Spannarm wird ohne jegliche mechanische Bearbeitung zur Aufnahme bzw. Befestigung der Spannrolle mit den übrigen Bauteilen der Spannvorrichtung montiert. Die mechanische Bearbeitung zur Abstützung und Befestigung der Spannrolle an dem Spannarm erfolgt ausschließlich in einer verschwenkten Lage des Spannarms zu dem Maschinenteil, wobei sich in dieser Lage eine Verkippung aufgrund des Einbauspiels, der Fertigungstoleranzen sowie einer elastischen Verformung einstellt. Die in dieser Position des Spannarms vorgenommene mechanische Bearbeitung gewährleistet damit eine für die Funktion des Zugmitteltriebs gewünschte exakt ausgerichtete Spannrolle, an der das Zugmittel geführt ist. Die Spannrollenmantellinie ist dabei rechtwinklig zum Zugmittel bzw. zu den Anschraubflächen der Spannvorrichtung an der Brennkraftmaschine ausgerichtet.

Die erfindungsgemäße mechanische Bearbeitung des Spannarms gewährleistet die Einhaltung bzw. Unterschreitung zulässiger Fluchtungsabweichungen von ≦ 0,5°. Damit ist gleichzeitig eine verbesserte Zugmittelführung sichergestellt, insbesondere hinsichtlich des Riemenverschleißes.

Zur Einhaltung der gewünschten, exakten Lageposition der Spannrolle, wird erfindungsgemäß der Spannarm während der mechanischen Bearbeitung rückwirkungsfrei in der Haltevorrichtung unterstützt bzw. abgestützt. Folglich ist die Genauigkeit der mechanischen Bearbeitung nicht abhängig von der Verwindungssteifigkeit des Spannarms.

Die Erfindung schließt weiterhin ein, die Bohrung zur Befestigung der Spannrolle an dem Spannarm schräg verlaufend in den als Gußteil gestalteten Spannarm einzuformen. Diese Bohrungslage ermöglicht unterstützend zu der erfindungsgemäß bearbeiteten Anlagefläche einen verbesserten Ausgleich der Fluchtungsabweichung.

Eine bevorzugte Weiterbildung der Erfindung sieht vor, die mechanische Bearbeitung von der Anlagefläche und der Gewindebohrung in einem Arbeitsgang durchzuführen, um den erforderlichen Zeitaufwand für die Bearbeitung zu optimieren. Als eine weitere Kostensenkungsmaßnahme bietet sich an, die unterschiedlichen mechanischen Bearbeitungen synchron vorzunehmen.

Als Maßnahme, mit dem der Verschleiß vorzubeugen bzw. auszugleichen ist, der sich bei Betrieb der Spannvorrichtung einstellt, schließt die Erfindung weiterhin eine mechanische Bearbeitung zur Erzielung einer positiven Fluchtungsabweichung ein. Dazu wird die Anlagefläche an dem Spannarm für den inneren Wälzlagerring unter Berücksichtigung einer positiven Fluchtungsabweichung bearbeitet. Vorzugsweise wird die positive Fluchtungsabweichung entsprechend einer empirischen Verschleißermittlung bestimmt und die Bearbeitung entsprechend vorgenommen. Die Bearbeitung der Anlagefläche unter Beachtung einer positiven Toleranzabweichung ermöglicht die Einhaltung eines engen zulässigen Toleranzbereichs zwischen einer positiven und einer negativen Fluchtungsabweichung über die Lebensdauer des Fahrzeugs bzw. des Zugmitteltriebs, der für die Funktion und die Lebensdauer des Zugmittels entscheidend ist.

Eine Weiterbildung des Erfindungsgedankens schließt eine mechanische Bearbeitung von Abstützflächen des Maschinenteils an einem Gehäuse, beispielsweise einer Brennkraftmaschine ein, zum Ausgleich einer fertigungsbedingten Fluchtungsabweichung des Spannarms bzw. zum Ausgleich eines Radiallagerverschleißes. Die Bearbeitung der Abstützflächen kann alternativ oder zusätzlich zur mechanischen Bearbeitung der Anlagefläche am Spannarm erfolgen.

### Kurze Beschreibung der Zeichnungen

Der der Erfindung zu Grunde liegende Gedanke wird in der nachfolgenden Beschreibung anhand von Ausführungsbeispielen, die in den Zeichnungen dargestellt sind, näher beschrieben. Es zeigen:
- Figur 1: eine Spannvorrichtung, deren Spannrolle über ein herkömmliches Wälzlager mittels einer Verschraubung an dem Spannarm angeordnet ist;
- Figur 2: eine Spannvorrichtung, bei der die Spannrolle über eine Wälzlagerung mit einem topfartig gestalteten Innenring an dem Spannarm befestigt ist;
- Figur 3: in einer Ansicht das Maschinenteil mit zugehörigem Spannarm einer Spannvorrichtung;
- Figur 4: eine Vorrichtung, auf der das Maschinengehäuse lagepositioniert ist und der Spannarm in eine der Betriebsstellung entsprechenden Position gehalten ist.

### Detaillierte Beschreibung der Zeichnungen

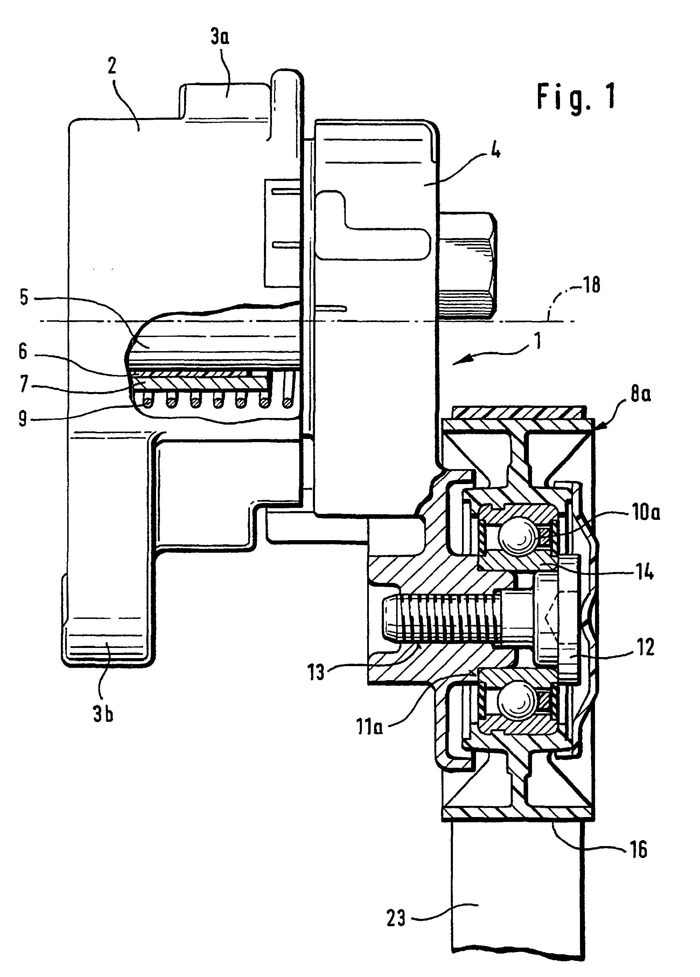

Die Figur 1 zeigt eine Spannvorrichtung 1, bestehend aus einem Maschinenteil 2, welches ortsfest mittels Befestigungsösen 3a, 3b beispielsweise an einer in Figur 1 nicht abgebildeten Brennkraftmaschine ortsfest befestigt ist. Dem Maschinenteil 2 ist seitlich ein Spannarm 4 zugeordnet, welcher über einen Lagerzapfen 5 über ein als Radiallager 6 ausgeführtes Gleitlager schwenkbar in einer Nabe 7 des Maschinenteils 2 angeordnet ist. In einer Nennposition, d. h. in einer Einbaulage der Spannvorrichtung 1 stützt sich der Spannarm 4 über eine Spannrolle 8a federnd an einem Zugmittel 23 ab. Die federnde Abstützung der Spannrolle 8a erfolgt mittels einer Torsionsfeder 9, die konzentrisch die Nabe 7 umschließend zwischen dem Maschinenteil 2 und dem Spannarm 4 abgestützt ist. Die Spannrolle 8a ist über ein Wälzlager 10a an einer Anlagefläche 11a des Spannarms 4 abgestützt. Mittels einer Verschraubung 12, bestehend aus einer Führungsschraube, ist die Spannrolle 8a an dem Spannarm 4 befestigt. In eine Bohrung 13 des Spannarms 4 ist ein Gewinde eingebracht, zur Aufnahme einer Verschraubung 12, die den inneren Lagerring 14 des Wälzlagers 10a gegen die Anlagefläche 11a des Spannarms 4 presst.

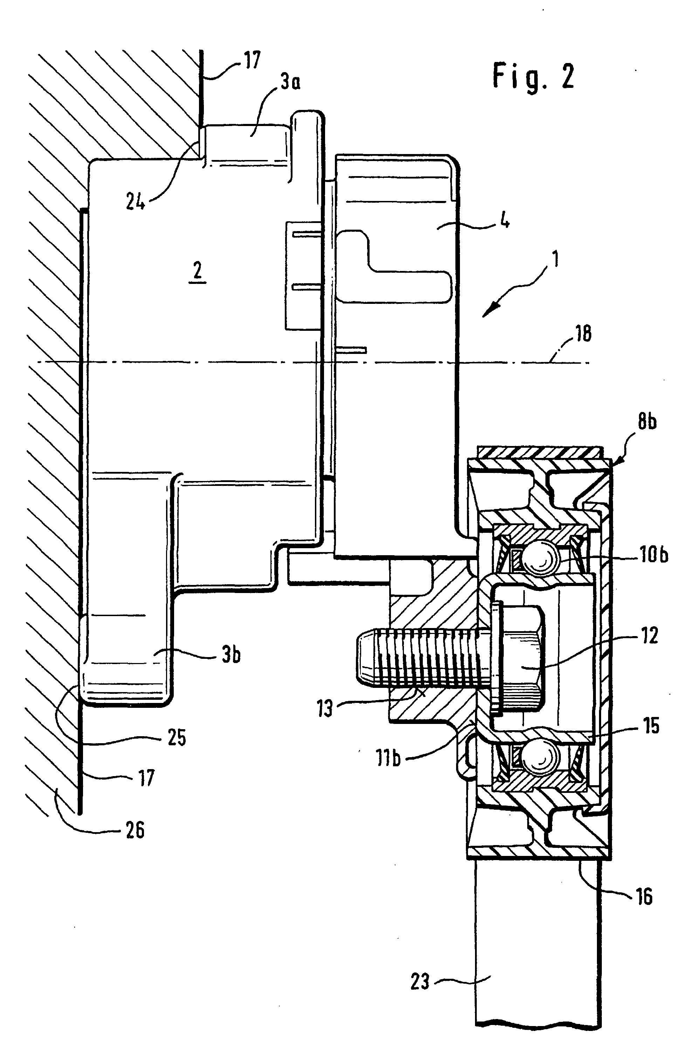

Die Figur 2 zeigt die Spannvorrichtung 1, die mit einer alternativ gelagerten Spannrolle 8b versehen ist. Alle übrigen Bauteile entsprechen der in Figur 1 abgebildeten Spannvorrichtung und sind folglich mit übereinstimmenden Bezugszeichen versehen. Die Spannrolle 8b ist über einen topfartig gestalteten, als ein Spanlosteil aus Blech geformten inneren Lagerring 15 an dem Spannarm 4 abgestützt. Als Verschraubung 12 ist eine handelsübliche Sechskantschraube vorgesehen, welche durch eine zentrische Bohrung des Lagerrings 15 führt und in das Gewinde 13 der Bohrung des Spannarms 4 verschraubt ist. Der topfartig gestaltete Lagerring 15 bietet eine im Vergleich zu dem Lagerring 14 vergrößerte Kontaktfläche, über die das Wälzlager 10b an der Anlagefläche 11 b des Spannarms 4 abgestützt ist.

Eine für die Funktion des Zugmitteltriebs erforderliche mittige Anlage des Zugmittels 23 an der Spannrolle 8b wird erzielt, wenn eine Mantellinie 16 der Spannrolle 8b rechtwinklig zu einer Anschraubfläche 17 der Spannvorrichtung 1 ausgerichtet ist, mit der die Spannvorrichtung 1 beispielsweise an einem Gehäuse 26 einer Brennkraftmaschine befestigt ist. Eine Schiefstellung, d. h. eine Fluchtungsabweichung der Spannrolle 8b führt zu einer mittenversetzten Führung des Zugmittels 23 an der Spannrolle 8b und kann im Extremfall zu einem Ablaufen des Zugmittels 23 von der Spannrolle 8b führen. Eine exakte Zugmittelführung ist ebenfalls gegeben, wenn die Mantellinie 16 parallel zu einer Längsachse 18 der Spannvorrichtung 1 ausgerichtet ist oder rechtwinklig zu dem Zugmittel 23.

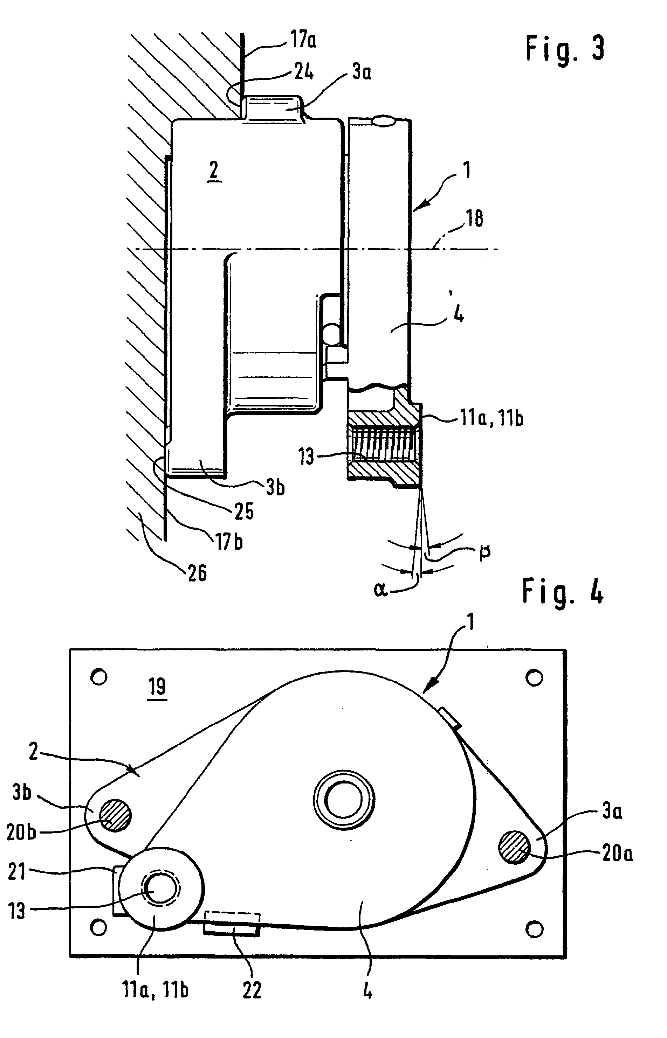

Die Figur 3 zeigt die bis auf die Spannrolle vormontierte Spannvorrichtung 1 und verdeutlicht damit die Lage der Anlagefläche 11a bzw. 11b. Zur Erzielung einer optimalen Führung des Zugmittels 9 erfolgt die mechanische Bearbeitung der Anlagefläche 11a, 11b sowie der Bohrung 13 in einer Nennposition des Spannarms 4. Diese der Einbaulage der Spannvorrichtung 1 entsprechende Position des Spannarms 4 wird erzielt, indem die Einbaulage simuliert wird durch eine lagefixierte Befestigung des Maschinenteils 2 und einer Verdrehung des Spannarms 4 in eine das Zugmittel 23 spannende Position.

Die mechanische Bearbeitung des Spannarms 4 in dieser Position ermöglicht den Ausgleich einer negativen Fluchtungsabweichung, gekennzeichnet durch den Winkel "α". Die Fluchtungsabweichung "α" entsteht aufgrund eines Lagerspiels des Radiallagers 6 und der damit verbundenen Verkippung des Spannarms 4 sowie einer elastischen Verformung und von Fertigungstoleranzen der Spannvorrichtung 1. Die mechanische Bearbeitung der Anlagefläche 11a, 11b zur Erzielung einer positiven Fluchtungsabweichung "β" hat den Vorteil, dass die Anlage der Spannrolle 8a, 8b so erfolgt, dass deren Mantellinie 16 einem möglichen Verschleiß des Radiallagers 6 vorgreift und sich folglich eine engtolerierte Fluchtungsabweichung beispielsweise in einem Bereich von ± 0,2° einstellt über die Lebensdauer des Fahrzeugs bzw. der Spannvorrichtung 1. Zur Erzielung einer negativen Fluchtungsabweichung "α" oder einer positiven Fluchtungsabweichung "β" kann ebenfalls eine entsprechende mechanische Bearbeitung von Anschraubflächen 17a, 17b der Befestigungsösen 3a, 3b erfolgen, über die sich die Spannvorrichtung 1 an Abstützflächen 24, 25 der Brennkraftmaschine abstützt.

Die Figur 4 zeigt eine Haltevorrichtung 19, mit der die mechanische Bearbeitung der Anlageflächen 11a, 11b sowie der Bohrung 13 in der Nennposition des Spannarms 4 erfolgen kann. Dazu ist die Haltevorrichtung 19 mit Aufnahmezapfen 20a, 20b versehen, die in die Befestigungsösen 3a, 3b eingreifen. Synchron zum Aufschieben des Maschinenteils 2 auf die Aufnahmezapfen 20a, 20b erfolgt eine Verdrehung des Spannarms 4 im Gegenuhrzeigersinn bis in die Nennposition, in der eine Haltelasche 21 den Spannarm 4 lagepositioniert. Der Spannarm 4 ist in dieser Lage gleichzeitig an einer Auflage 22 der Haltevorrichtung 19 abgestützt zur Erzielung einer rückwirkungsfreien mechanischen Bearbeitung der Anlagefläche 11 a, 11b sowie der Bohrung 13.

### Bezugszahlen

- 1: Spannvorrichtung
- 2: Maschinenteil
- 3a: Befestigungsöse
- 3b: Befestigungsöse
- 4: Spannarm
- 5: Lagerzapfen
- 6: Radiallager
- 7: Nabe
- 8a: Spannrolle
- 8b: Spannrolle
- 9: Torsionsfeder
- 10a: Wälzlager
- 10b: Wälzlager
- 11a: Anlagefläche
- 11b: Anlagefläche
- 12: Verschraubung
- 13: Bohrung
- 14: Lagerring
- 15: Lagerring
- 16: Mantellinie
- 17a: Anschraubfläche
- 17b: Anschraubfläche
- 18: Längsachse
- 19: Haltevorrichtung
- 20a: Aufnahmezapfen
- 20b: Aufnahmezapfen
- 21: Haltelasche
- 22: Auflage
- 23: Zugmittel
- 24: Abstützfläche
- 25: Abstützfläche
- 26: Gehäuse

## Patentansprüche

1. Spannvorrichtung für Zugmittel wie Riemen und Ketten mit einem Spannarm (4), dessen Lagerzapfen (5) über ein Radiallager (6) in einem ortsfesten Maschinenteil (2) schwenkbar gelagert ist und wobei an dem Spannarm (4) eine über ein Wälzlager (10a, 10b) drehbar und mittels einer Torsionsfeder (9) federnd an dem Zugmittel (23) abgestützte Spannrolle (8a, 8b) angeordnet ist, wobei ein Lagerring (14, 15) des Wälzlagers (10a, 10b) unmittelbar über eine Verschraubung (12) an dem Spannarm (4) befestigt ist, wobei ein Lagerring (14, 15) des Wälzlagers (10a, 10b) unmittelbar an einer Anlagefläche (11a, 11b) des Spannarms (4) abgestützt ist, **dadurch gekennzeichnet, daß**, zum Ausgleich einer Fluchtungsabweichung (α, β) in einer Nennposition, die Anlagefläche (11a, 11b) von einer rechtwinkligen Ausrichtung zu einer Längsachse (18) der Spannvorrichtung (1) abweicht.

2. Spannvorrichtung für Zugmittel nach Anspruch 1, wobei eine zentrisch in die Anlagefläche (11a, 11b) des Spannarms (4) eingebrachte Bohrung (13) für die Verschraubung (12) sich von einem achsparallelen Verlauf zu der Längsachse (18) unterscheidet.

3. Verfahren zur Gestaltung des Spannarms (4) nach Anspruch 1, die eine mechanische Bearbeitung der Anlagefläche (11a, 11b) des Spannarms (4) vorsieht, die nach einer Vormontage des Spannarms (4) mit dem Maschinenteil (2) in einer der Einbaulage der Spannvorrichtung (1) entsprechenden Nennposition des Spannarms (4) erfolgt, zum Ausgleich einer Fluchtungsabweichung (α, β) des Spannarms (4).

4. Verfahren nach Anspruch 3, wobei die mechanische Bearbeitung der Anlagefläche (11a, 11b) des Spannarms (4) in einer Haltevorrichtung (19) erfolgt, in der sowohl das Maschinenteil (2) als auch der verschwenkte Spannarm (4) entsprechend der Einbaulage lagepositioniert sind (Figur 4).

5. Verfahren nach Anspruch 3, bei der die mechanische Bearbeitung der Anlagefläche (11a, 11b) eine Fluchtungsabweichung (α) von ≦ 0,5° sicherstellt.

6. Verfahren nach Anspruch 3, wobei während der mechanischen Bearbeitung der Spannarm (4) rückwirkungsfrei an einer Auflage (22) der Haltevorrichtung (19) abgestützt ist.

7. Verfahren zur Herstellung der Bohrung (13) in dem Spannarm (4) nach Anspruch 2, wobei in den als ein Gußteil nach Anspruch 3 gestalteten Spannarm (4), die Bohrung (13) zum Ausgleich der Fluchtungsabweichung (α) entsprechend schräg verlaufend eingeformt ist.

8. Verfahren nach Anspruch 7, wobei in der Nennposition des Spannarms (4) in die Bohrung (13) ein Gewinde für die Verschraubung (12) eingebracht wird.

9. Verfahren nach Anspruch 3 und Anspruch 7 bei der in einem Arbeitsgang die mechanische Bearbeitung der Anlagefläche (11a, 11b) und der Bohrung (13) erfolgt.

10. Verfahren nach Anspruch 3, bei der die mechanische Bearbeitung der Anlageflächen (11a, 11b) des Spannarms (4) zur Erzielung einer positiven Fluchtungsabweichung (β) erfolgt.

11. Spannvorrichtung für Zugmittel, wie Riemen und Ketten, mit einem Spannarm (4), dessen Lagerzapfen (5) über ein Radiallager (6) in einem ortsfesten Maschinenteil (2) schwenkbar gelagert ist und an dem Spannarm (4) eine über ein Wälzlager (10a, 10b) drehbare und mittels einer Torsionsfeder (9) federnd an dem Zugmittel (23) abgestützte Spannrolle (8a, 8b) angeordnet ist, wobei das Maschinenteil (2) über Abstützflächen (24,25) an einem Gehäuse (26) anliegt, **dadurch gekennzeichnet, daß**, zum Ausgleich einer Fluchtungsabweichung (α, β), die Abstützflächen (24,25) von einer rechtwinkeligen Ausrichtung zu einer Längsachse (18) der Spannvorrichtung (1) abweichen.

## Claims

1. Tensioning device for traction means, such as belts and chains, with a tensioning arm (4), the bearing journal (5) of which is mounted pivotably in a fixed machine part (2) via a radial bearing (6), the tensioning arm (4) having arranged on it a tensioning roller (8a, 8b) supported on the traction means (23) rotatably via a rolling bearing (10a, 10b) and resiliently by means of a torsion spring (9), a bearing ring (14, 15) of the rolling bearing (10a, 10b) being fastened directly to the tensioning arm (4) via a screw connection (12), and a bearing ring (14, 15) of the rolling bearing (10a, 10b) being supported directly on a bearing surface (11a, 11b) of the tensioning arm (4), **characterized in that**, for the compensation of an alignment deviation (α, β) in a nominal position, the bearing surface (11a, 11b) deviates from an orientation at right angles to a longitudinal axis (18) of the tensioning device (1).

2. Tensioning device for traction means according to Claim 1, a bore (13) introduced centrally into the bearing surface (11a, 11b) of the tensioning arm (4) and intended for the screw connection (12) differing from a run which is axially parallel to the longitudinal axis (18).

3. Method for configuration of the tensioning arm (4) according to Claim 1, which provides a mechanical machining of the bearing surface (11a, 11b) of the tensioning arm (4) which takes place after a premounting of the tensioning arm (4) together with the machine part (2) in a nominal position of the tensioning arm (4) corresponding to the installation position of the tensioning device (1), for the compensation of an alignment deviation (α, β) of the tensioning arm (4).

4. Method according to Claim 3, the mechanical machining of the bearing surface (11a, 11b) of the tensioning arm (4) taking place in a holding device (19), in which both the machine part (2) and the pivoted tensioning arm (4) are placed in position according to the installation position (Figure 4).

5. Method according to Claim 3, in which the mechanical machining of the bearing surface (11a, 11b) ensures an alignment deviation (α) of ≦ 0.5°.

6. Method according to Claim 3, the tensioning arm (4) being supported reactionlessly on a support (22) of the holding device (19) during the mechanical machining.

7. Method for producing the bore (13) in the tensioning arm (4) according to Claim 2, the bore (13) for compensating the alignment deviation (α) being integrally formed, so as to run correspondingly obliquely, into the tensioning arm (4) configured as a casting according to Claim 3.

8. Method according to Claim 7, a thread for the screw connection (12) being introduced into the bore (13) in the nominal position of the tensioning arm (4).

9. Method according to Claim 3 and Claim 7, in which the mechanical machining of the bearing surface (11a, 11b) and of the bore (13) takes place in one operation.

10. Method according to Claim 3, in which the mechanical machining of the bearing surfaces (11a, 11b) of the tensioning arm (4) takes place in order to achieve a positive alignment deviation (β).

11. Tensioning device for traction means, such as belts and chains, with a tensioning arm (4), the bearing journal (5) of which is mounted pivotably in a fixed machine part (2) via a radial bearing (6), the tensioning arm (4) having arranged on it a tensioning roller (8a, 8b) supported on the traction means (23) rotatably via a rolling bearing (10a, 10b) and resiliently by means of a torsion spring (9), the machine part (2) bearing against a housing (26) via supporting surfaces (24, 25), **characterized in that**, for the compensation of an alignment deviation (α, β), the supporting surfaces (24, 25) deviate from an orientation at right angles to a longitudinal axis (18) of the tensioning device (1).

## Revendications

1. Dispositif de tension pour moyens de traction comme des courroies et des chaînes, qui comprend un bras de tension (4) dont le tourillon de palier (5) est monté à pivotement dans une partie fixe (2) d'une machine par l'intermédiaire d'un palier radial (6), un galet de tension (8a, 8b) étant disposé sur le bras de tension (4) de manière à pouvoir tourner par l'intermédiaire d'un palier à rouleaux (10a, 10b), et étant soutenu de manière élastique sur le moyen de traction (23) par l'intermédiaire d'un ressort de torsion (9), une bague de palier (14, 15) du palier à rouleaux (10a, 10b) étant fixée directement sur le bras de tension (4) par une liaison vissée (12), une bague de palier (14, 15) du palier à rouleaux (10a, 10b) étant fixée directement sur une surface de pose (11a, 11b) du bras de tension (4), **caractérisé en ce que** pour compenser un défaut d'alignement (α, β) dans une position nominale, la surface de pose (11a, 11b) s'écarte d'une orientation à angle droit par rapport à un axe longitudinal (18) du dispositif de tension (1).

2. Dispositif de tension pour moyens de traction selon la revendication 1, dans lequel un alésage (13) ménagé au centre de la surface de pose (11a, 11b) du bras de tension (4) pour la liaison vissée (12) s'écarte d'une orientation parallèle à l'axe longitudinal (18).

3. Procédé de réalisation du bras de tension (4) selon la revendication 1, qui prévoit un usinage mécanique de la surface de pose (11a, 11b) du bras de tension (4) qui est réalisé après le prémontage du bras de tension (4) sur la partie (2) de la machine avec le bras de tension (4) dans sa position nominale qui correspond à la position de montage du dispositif de tension (1), pour compenser un défaut d'alignement (α, β) du bras de tension (4).

4. Procédé selon la revendication 3, dans lequel l'usinage mécanique de la surface de pose (11a, 11b) du bras de tension (4) s'effectue dans un dispositif de maintien (19) dans lequel à la fois la partie (2) de la machine et le bras de tension (4) pivoté sont positionnés en correspondance à la position de montage (Fig. 4).

5. Procédé selon la revendication 3, dans lequel l'usinage mécanique de la surface de pose (11a, 11b) garantit un défaut d'alignement (α) ≤ 0,5°.

6. Procédé selon la revendication 3, dans lequel le bras de tension (4) est appuyé sans recul sur un appui (22) du dispositif de maintien (19) pendant l'usinage mécanique.

7. Procédé de réalisation de l'alésage (13) dans le bras de tension (4) selon la revendication 2, dans lequel l'alésage (13) de compensation du défaut d'alignement (α) est formé sous une orientation oblique appropriée dans le bras de tension (4) configuré comme pièce coulée selon la revendication 3.

8. Procédé selon la revendication 7, dans lequel un filet pour la liaison vissée (12) est réalisé dans l'alésage (13), le bras de tension (4) étant dans sa position nominale.

9. Procédé selon la revendication 3 et la revendication 7, dans lequel l'usinage mécanique de la surface de pose (11a, 11b) et l'alésage (13) sont réalisés en une étape de travail.

10. Procédé selon la revendication 3, dans lequel l'usinage mécanique de la surface de pose (11a, 11b) du bras de tension (4) est réalisé pour obtenir un défaut positif d'alignement (β).

11. Dispositif de tension pour moyens de traction comme des courroies et des chaînes, qui comprend un bras de tension (4) dont le tourillon de palier (5) est monté à pivotement dans une partie fixe (2) d'une machine par l'intermédiaire d'un palier radial (6), un galet de tension (8a, 8b) étant disposé sur le bras de tension (4) de manière à pouvoir tourner par l'intermédiaire d'un palier à rouleaux (10a, 10b), et étant soutenu de manière élastique sur le moyen de traction (23) par l'intermédiaire d'un ressort de torsion (9), la partie (2) de la machine étant placée par des surfaces d'appui (24, 25) sur un boîtier (26), **caractérisé en ce que** pour compenser un défaut d'alignement (α, β), les surfaces d'appui (24, 25) s'écartent d'une orientation à angle droit par rapport à un axe longitudinal (18) du dispositif de tension (1).
